# EUROPÄISCHE PATENTSCHRIFT

(11) **EP 1 582 543 B1**
(45) Veröffentlichungstag und Bekanntmachung des Hinweises auf die Patenterteilung: **07.11.2007**
(21) Anmeldenummer: 05006049.0
(22) Anmeldetag: 19.03.2005
(51) Int. Cl.: C08G 18/48, C08G 18/76, C08G 18/79, C08G 18/10, C09D 175/04

(54) **Feuchtigkeitshärtende Prepolymere**
Moisture-curable prepolymers
Prepolymères durcissables par l'humidité

(30) Priorität: 01.04.2004 DE 102004015986
(43) Veröffentlichungstag der Anmeldung: 05.10.2005
(73) Patentinhaber: Bayer MaterialScience AG, 51368 Leverkusen (DE)
(72) Erfinder: Niesten, Meike, Dr., 51061 Köln (DE); Irle, Christoph, Dr., 08960 Sant Just Desvern (ES); Comajuan, Federico, 08329 Teia (ES); Guiteras, Maria Almato, Dr., 08031 Barcelona (ES); Vicente, Amadeo, 08014 Barcelona (ES)

(56) Entgegenhaltungen:
- EP-A- 1 378 529
- US-A1- 2003 208 025

## Beschreibung

Die Erfindung betrifft feuchtigkeitshärtende freie Isocyanatgruppen aufweisende Polyurethan-Prepolymere, ein Verfahren zu ihrer Herstellung und ihre Verwendung als Bindemittel in Lacken und Beschichtungen.

Feuchtigkeitshärtende Prepolymere als Bestandteil einkomponentiger Lacke sind seit langem bekannt (z.B. H. Kittel, Lehrbuch der Lacke und Beschichtungen, 2, S Hirzel Verlag Stuttgart, Leipzig, 1998). Diese Systeme bestehen aus Polyurethan-Prepolymeren mit endständigen freien Isocyanatgruppen (NCO-Gruppen). Nach Applikation, unter Einfluss von Luftfeuchtigkeit findet Vernetzung unter Bildung von Harnstoffgruppen statt.

Für eine schnelle Trocknung sind Prepolymere auf Basis aromatischer Isocyanate, besonders 2,4- und gegebenenfalls 2,6-Diisocyanatotoluol (TDI), am besten geeignet.

Insbesondere die Isocyanuratgruppen aufweisenden Polyisocyanate auf Basis der genannten TDI-Typen stellen wertvolle Bestandteile für die Herstellung schnelltrocknender Polyurethanbeschichtungen für den Holz- und Möbelbereich dar.

Grund der schnellen Trocknung der TDI-Isocyanurate ist der hohe Verzweigungsgrad. Dies führt zu einem schnellen Anstieg der Glasübergangstemperatur während der Vernetzung unter Bildung von Harnstoffgruppen. Durch den hohen Vernetzungsgrad sind solche schnell trocknenden Systeme jedoch oft spröde und Filme aus solchen Lacken weisen nicht die erforderliche Elastizität auf. Vor allem bei starken Temperaturwechseln können so Risse im Lack entstehen. Dies gilt insbesondere für Beschichtungen auf starken Volumenschwankungen unterliegenden Substraten, wie z.B. Holz.

Für die Flexibilisierung sind z.B. hochmolekulare Polyether zum Aufbau des Prepolymeres geeignet. Durch die Flexibilisierung werden die Polymere in der Regel derart weich, dass die Trocknungsgeschwindigkeit deutlich verlangsamt wird. In der Praxis bedeutet das, dass solche feuchtigkeitshärtenden Beschichtungen auf Basis von Polyurethan-Prepolymeren deutlich langsamer trocknen als z.B. die weit verbreiteten Nitrocellulose Kombilacke (NC-Lacke).

Die Verträglichkeit von langkettigen Polyethern mit TDI-Isocyanuraten ist außerdem begrenzt, was mitunter bereits bei kleinen Mengen Polyether schon zu trüben oder nicht lagerstabilen Produkten führt.

Aufgabe der vorliegenden Erfindung war dementsprechend die Bereitstellung von Polyurethan-Prepolymeren, die die Herstellung von Lacken und Beschichtungen erlauben, welche zu NC-Lacken vergleichbare Trocknungsgeschwindigkeiten aufweisen und die zugleich die erforderliche Elastizität und das gewohnt hohe Beständigkeitsniveau von Polyurethanlacken erreichen.

Es wurde gefunden, dass elastische und zugleich schnell trocknende feuchtigkeitshärtende Lacke formuliert werden können, wenn man als Isocyanatkomponente eine lösemittelhaltige Zubereitung enthaltend NCO-gruppenhaltige Prepolymere basierend auf TDI-Isocyanuratpolyisocyanaten und Diphenylmethandiisocyanaten eingesetzt, wobei wenigstens eines der Prepolymere unter Verwendung eines Ethylenoxidblock-haltigen Polyetherdiols mit einem zahlenmittleren Molekulargewicht von 3 000 bis 4 500 g/mol und einen Ethylenoxidgehalt von 2 bis 18 Gew.-% bezogen auf alle enthaltenen Alkylenoxideinheiten des Diols hergestellt wurde.

Gegenstand der Erfindung sind daher lösemittelhaltige Zubereitungen mit einem NCO-Gehalt von 1 bis 7 Gew.-%, einem Festkörpergehalt von 20 bis 70 Gew.-%, einem Gehalt an monomerem TDI von weniger als 0,2 Gew.-% und monomeren Methylendiphenyldiisocyanaten von weniger als 2 Gew.-% enthaltend NCO-gruppenhaltige Prepolymere basierend auf TDI-Isocyanuratpolyisocyanaten und Diphenylmethandiisocyanaten, wobei wenigstens eines der Prepolymere unter Verwendung eines Ethylenoxidblock-haltigen Polyetherdiols mit einem zahlenmittleren Molekulargewicht von 3 000 bis 4 500 g/mol und einen Ethylenoxidgehalt von 2 bis 18 Gew.% bezogen auf alle enthaltenen Alkylenoxideinheiten des Diols hergestellt wurde.

Ferner ist ein Gegenstand der Erfindung ein Verfahren zur Herstellung der lösemittelhaltigen Zubereitungen, bei dem in Anwesenheit organischer Lösemittel NCO-gruppenhaltige Prepolymere aus
A) einer TDI-Komponente enthaltend TDI-Isocyanuratpolyisocyanate und
B) einer MDI-Komponente enthaltend Diphenylmethandiisocyanate
   durch Umsetzung wenigstens einer der beiden Komponenten mit
C) einem Polyetherdiol mit einem zahlenmittleren Molekulargewicht von 3 000 bis 4 500 g/mol und einen Ethylenoxidgehalt von 2 bis 18 Gew.-% bezogen auf alle enthaltenen Alkylenoxideinheiten des Diols
hergestellt werden.

Als TDI-Isocyanuratpolyisocyanate A) werden bei der Herstellung der erfmdungsgemäßen Zubereitungen typischerweise Isocyanurate aus TDI-Isomerenmischungen von 2,4-TDI und ggf. 2,6-TDI mit Anteilen von bevorzugt 80 bis 100 Gew.-% des 2,4- und 0 bis 20 Gew.-% des 2,6-Isomers, ganz besonders bevorzugt 80 Gew.-% des 2,4- und 20 Gew.-% des 2,6-Isomers eingesetzt, wobei diese Prozentangaben auf das lösemittelfreie Polyisocyanatharz bezogen sind.

Isocyanurat-Polyisocyanate aus TDI sind durch katalysierte Trimerisation der entsprechenden Toluylendiisocyanate nach bekannten Methoden erhältlich. Diese werden beispielsweise in DE-A 195 23 657 oder DE-A 392 85 03 beschrieben.

Bevorzugt werden bei der Herstellung der erfindungsgemäßen Zubereitungen die TDI-Isocyanuratpolyisocyanate in A) als organische Lösung mit einem NCO-Gehalt von 7 bis 8,5 Gew.-%, einem Gehalt an TDI-Restmonomeren von < 0,5 Gew.-% und einem Festkörper von 30 bis 70 Gew.-% eingesetzt.

Als organische Lösemittel können Ester, wie z.B. Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische verwendet werden. Bevorzugt ist die Verwendung von Butylacetat.

Als Diphenylmethandiisocyanate B) können die bekannten MDI-Typen 2,4'-MDI, 4,4'-MDI, die darauf basierenden höhermolekularen Polyisocyanate sowie deren beliebigen Gemische untereinander eingesetzt werden. Bevorzugt ist die Verwendung von Gemischen monomerer Methylendiphenyldiisocyanate mit 60 bis 100 Gew.-% 4,4'-MDI und 0 bis 40 Gew.-% 2,4'-MDI.

Die Polyetherdiole der Komponente C) sind durch die in der Polyurethanchemie an sich bekannte Technologie der basenkatalysierten Alkoxylierung geeigneter difunktioneller Startermoleküle zugänglich. Die hierzu gebräuchlichen Methoden sind dem Fachmann vertraut und beispielsweise in "Ullmanns Encyclopädie der industriellen Chemie", Band A21, 1992, S. 670 ff. oder EP-A 761 708 oder WO 97/40086 beschrieben.

Auf durch DMC-Katalyse hergestellte Diole als Bestandteil von C) wird ausdrücklich verzichtet, da diese Diole nicht zu den gewünschten Eigenschaften der erfindungsgemäßen Zubereitungen führen.

Geeignete Starter zur Herstellung der Polyetherdiole sind typischerweise ethergruppenfreie, zweiwertige Alkohole. Als Startermoleküle geeignet sind zweiwertige Alkohole wie beispielsweise Ethylenglykol, Propandiol-1,2 und -1,3, Butandiol-1,2, 1,3, -1,4 und -2,3, Pentandiol-1,5, 3-Methylpentandiol-1,5, Hexandiol-1,6, Octandiol-1,8, 2-Methylpropandiol-1,3, 2,2-Dimethylpropandiol-1,3, 2-Ethyl-2-butylpropandiol-1,3, 2,2,4-Trimethylpentandiol-1,3, 2-Ethylhexandiol-1,3, höhermolekulare α,ω-Alkandiole mit 9 bis 18 Kohlenstoffatomen, Cyclohexandimethanol, Cyclohexandiole oder deren Gemische geeignet.

Als Alkylenoxide kommt bevorzugt Propylenoxid in Kombination mit Ethylenoxid zum Einsatz.

Die Monomere werden dabei bevorzugt blockweise an den Starter addiert, wobei der Propylenoxidblock bevorzugt zuerst an den Starter addiert wird, so dass die nach Addition der Ethylenoxideinheiten erhältlichen Polyetherdiole nur primäre OH-Gruppen aufweisen.

Die an die vorstehend genannten difunktionellen Starter der Polyetherdiole addierten Alkylenoxide sind bevorzugt zu 82 bis 98 Gew.-% bezogen auf die Summe aller addierten Alkylenoxide Propylenoxideinheiten und zu 2 bis 18 Gew.-% Ethylenoxideinheiten. Besonders bevorzugt enthalten die Polyether 85 bis 95 Gew.-% Propylenoxideinheiten und 5 bis 15 Gew.-% Ethylenoxideinheiten.

Die in C) eingesetzten Polyetherdiole haben bevorzugt zahlenmittlere Molekulargewichte von 3 500 bis 4 200 g/mol.

Neben den vorstehend genannten Polyetherdiolen aus C) können auch weitere von denen aus C) verschiedene Polyetherpolyole bei der Prepolymerherstellung verwendet werden.

Zu ihrer Herstellung werden di- oder höherfunktionelle Starter eingesetzt. Geeignet sind beispielsweise mehrwertige Alkohole wie beispielsweise Ethylenglykol, Propandiol-1,2 und -1,3, Butandiol-1,2, 1,3, -1,4 und -2,3, Pentandiol-1,5, 3-Methylpentandiol-1,5, Hexandiol-1,6, Octandiol-1,8, 2-Methylpropandiol-1,3, 2,2-Dimethylpropandiol-1,3, 2-Ethyl-2-butylpropandiol-1,3, 2,2,4-Trimethylpentandiol-1,3, 2-Ethylhexandiol-1,3, höhermolekulare α,ω-Alkandiole mit 9 bis 18 Kohlenstoffatomen, Cyclohexandimethanol, Cyclohexandiole; geeignete Aminoalkohole sind z.B. 2-Aminoethanol, 2-(Methylamino)-ethanol, Diethanolamin, 3-Amino-1-propanol, 1-Amino-2-propanol, Diisopropanolamin, 2-Amino-2-hydroxymethyl-1,3-propandiol oder deren Gemische. Glycerin, Trimethylolpropan, Butantriol-1,2,4, Hexantriol-1,2,6, Bis(trimethylolpropan), Pentaerythrit sind auch geeignet.

Geeignete Starter auf Aminbasis sind mehrwertige Amine, insbesondere aliphatische oder cycloaliphatische Amine, wie z.B. Ethylendiamin, 1,2-Diaminopropan, 1,3-Diaminopropan, 1,4-Diaminobutan, 1,3-Diamino-2-2-dimethylpropan, 4,4-Diaminodicyclohexylmethan, Isophorondiamin, Hexamethylendiamin, 1, 12-Dodecandiamin oder deren Mischungen.

Bevorzugt werden Starter der vorstehend genannten Art eingesetzt, wobei diese Funktionalitäten von 2 - 4 aufweisen.

Zum Aufbau der Polyether kommen auch hier bevorzugt Ethylenoxid und/oder Propylenoxid zum Einsatz, wobei Blockpolyether basierend auf Ethylenoxid und Propylenoxid besonders bevorzugt sind.

Die Herstellung dieser gegebenenfalls zusätzlich eingesetzten Polyether kann so wohl basenkatalysiert als auch mittels DMC-Katalyse erfolgen.

Diese gegebenenfalls zusätzlich eingesetzten Polyether haben typischerweise zahlenmittlere Molekulargewichte von 1 500 bis 4 500 g/mol, bevorzugt 1 800 bis 4 200 g/mol.

Sofern diese überhaupt mit verwendet werden, beträgt ihr Anteil bezogen auf die Summe aller eingesetzten Polyetherpolyole (einschließlich der Diole aus C)) 5 bis 40 Gew.-%, bevorzugt 10 bis 20 Gew.-%.

Die erfindungsgemäßen Zubereitungen können nach einem Eintopf- oder einem Zweitopfverfahren hergestellt werden.

Beim Eintopfverfahren werden die Verbindungen aus A) und B) mit den Polyetherdiolen C) und gegebenenfalls den weiteren Polyetherpolyolen in Anwesenheit von Katalysatoren und/oder den genannten inerten Lösemitteln zum entsprechenden Polyurethanprepolymer umgesetzt. Dabei können die Verbindungen aus A) und B) beide von Anfang an bei der Umsetzung vorliegen oder aber zuerst die Verbindungen aus B) mit den Diolen aus C) teilweise oder vollständig umgesetzt werden und anschließend die Verbindungen aus A) zugesetzt werden.

Bei dem Zweitopfverfahren werden jeweils für sich die Isocyanate aus A) bzw. B) vorgelegt und wenigstens eines der beiden mit einem Polyether gemäß C) zum Prepolymer umgesetzt. Damit ist auch der Fall erfasst, wenn nur eines der beiden Isocyanate mit dem Polyetherdiol aus C) zum Prepolymer aufgebaut wird und das andere entweder gar nicht zum Prepolymer umgesetzt wird oder daraus ein Prepolymer basierend auf anderen Polyetherpolyolen, wie sie gegebenenfalls mitverwendet werden können, gebildet wird. Die Umsetzungen können jeweils in Anwesenheit von Katalysatoren und/oder Lösemitteln durchgeführt werden. Nach der Prepolymerherstellung werden die so erhältlichen Prepolymere, die ggf. in organischer Lösung vorliegen, dann miteinander vermischt.

Die Mengen der in A) und B) eingesetzten Verbindungen betragen bevorzugt 90 bis 98 Gew.-% A) und 2 bis 10 Gew.-% B), besonders bevorzugt 95 bis 99 Gew.-% A) und 1 bis 5 Gew.-% B).

Das Verhältnis der NCO-Gruppen der in A) und B) eingesetzten Verbindungen zu den isocyanatreaktiven Funktionen der in C) eingesetzten Polyetherdiole und der gegebenenfalls zusätzlich eingesetzten Polyetherpolyole beträgt bevorzugt 9 : 1 bis 16 : 1, besonders bevorzugt 10 : 1 bis 14 : 1.

Typischerweise findet die Herstellung der erfindungsgemäßen Zubereitungen bei Temperaturen von 40 bis 140°C, vorzugsweise 50 bis 110°C statt.

Zur Beschleunigung der Urethanisierung können die an sich bekannten Katalysatoren wie Organometallverbindungen, Amine (z.B. tertiäre Amine) oder Metallverbindungen wie Bleioctoat, Quecksilbersuccinat, Zinnoctoat oder Dibutylzinndilaurat verwendet werden. Falls Katalysatoren mitverwendet werden, werden diese vorzugsweise in Mengen von 0,001 bis 5 Gew.-%, insbesondere 0,002 bis 2 Gew.-% bezogen auf das Gesamtgewicht der jeweiligen Teilkomponenten verwendet.

Die Festkörpergehalte der so erhältlichen Zubereitungen betragen typischerweise 20 bis 70 Gew-%, besonders bevorzugt 20 bis 50 Gew.-%, wobei der Festkörpergehalt gegebenenfalls durch Zugabe weiterer inerter Lösemittel der vorstehend genannten Art eingestellt werden kann.

Die erfindungswesentlichen Zubereitungen können zur Herstellung schnelltrocknender feuchtigkeitshärtender Polyurethanbeschichtungen beispielsweise für Hölzer eingesetzt werden, wobei diese Beschichtungen auch bei tiefen Temperaturen von -20°C keine Tendenz zur Rissbildung zeigen.

Ein weiterer Gegenstand der Erfindung sind daher feuchtigkeitshärtende Beschichtungsmittel enthaltend
a) die erfindungsgemäßen lösemittelhaltigen Zubereitungen
b) gegebenenfalls Katalysatoren zur Beschleunigung der Reaktion der freien NCO-Gruppen mit Feuchtigkeit sowie
c) Hilfs- und Zusatzstoffe.

Als Katalysatoren b) zur Beschleunigung der NCO/Wasser-Reaktion können beispielsweise tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren verwendet werden.

Komponente b) wird, wenn überhaupt eingesetzt, in Mengen von 0,001 bis 5 Gew.-%, bevorzugt 0,01 bis 1 Gew.-% bezogen auf die Menge der Komponente A) verwendet.

Ggf. in Komponente c) enthaltene Hilfs- und Zusatzstoffe können z. B. oberflächenaktive Substanzen, Schleifwachse, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Ebenfalls möglich ist hier auch der Zusatz von den bereits zu Anfang genannten inerten Lösemitteln zur Viskositätseinstellung.

Ebenfalls möglich jedoch nicht bevorzugt ist die Verwendung neben a) von weiteren NCO-funktionellen Prepolymeren.

Bei der Herstellung der erfindungsgemäßen Beschichtungsmittel werden die Einzelkomponenten a) - c) in beliebiger Reihenfolge miteinander vermischt.

Beschichtungsmittel basierend auf den erfindungsgemäßen lösemittelhaltigen NCO-gruppenhaltigen Prepolymeren können nach an sich bekannten Methoden wie beispielsweise durch Spritzen, Streichen, Fluten oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilien, Leder oder Papier, bevorzugt ist Holz.

Die Aushärtung kann bei Raumtemperatur oder bei erhöhten Temperatur ausgeführt werden.

### Beispiele

Soweit nicht abweichend angegeben beziehen sich alle Prozentangaben auf Gewichtsprozent.

Die Ermittlung des NCO-Gehaltes der in den Beispielen und Vergleichsbeispielen beschriebenen Harze erfolgte durch Titration gemäß DIN 53 185.

Die dynamischen Viskositäten wurden bei 23°C mit einem Rotationsviskosimeter (ViscoTester® 550, Thermo Haake GmbH, D-76227 Karlsruhe) bestimmt.

Der Restmonomerengehalt wurde mittels GC nach DIN 55956 bestimmt.

Die Lacke wurden bei Raumtemperatur unter Einfluss von Luftfeuchtigkeit gehärtet. Die relative Luftfeuchtigkeit lag im Bereich von 30 bis 50 %.

Als 100 % Luftfeuchtigkeit wird die maximale Menge Feuchtigkeit verstanden, die die Luft bei der entsprechenden Temperatur aufnehmen kann, ohne dass Wasserdampf entsteht.

Desmodur® IL 1451: TDI-basiertes, isocyanuratgruppenhaltiges Polyisocyanat, 50 Gew.-%-ig in Butylacetat, Handelsprodukt der Bayer MaterialScience AG, Leverkusen, DE)

### Ausgangspolyisocyanate

### Polyisocyanat A-I:

Zu 568 g Desmodur® IL 1451 wurden 150 g eines Propylenglykol gestarteten Polyetherdiols mit einem zahlenmittleren Molekulargewicht Mₙ von 4 007 g/mol, einem Propylenoxidgehalt von 86,7 Gew.-% und einem Ethylenoxidgehalt von 13,3 Gew.-% bei 80°C zugetropft. Nach beendeter Zugabe wurde bei 80°C weitergerührt bis der theoretische NCO-Gehalt von 5,3 Gew.-% erreicht wurde. Die Prepolymerlösung hatte einer Viskosität bei 23°C von 1 600 mPas und einen Festkörper Gehalt von 60 Gew.-% in Butylacetat.

### Polyisocyanat B-I

Zu 306 g Methylendiphenyldiisocyanat bestehend aus 65 Gew.-% 2,4-MDI und 35 Gew.-% 4,4'-MDI, wurden 1,9 g Dibutylzinndilaurat und 694 g eines Propylenglykol gestarteten Polyetherdiol mit einem Molekulargewicht von 4 007 g/mol und einem Propylenoxidgehalt von 86,7 Gew.-% und einem Ethylenoxidgehalt von 13,3 Gew.-% bei 80°C zugegeben. Nach beendeter Zugabe wurde bei 80°C weitergerührt bis der theoretische NCO-Gehalt von 16 Gew.-% erreicht wurde. Das Produkt hatte eine Viskosität bei 23°C von 5 400 mPas.

### Polyisocyanat B-II

Zu 574 g Desmodur® VL (MDI-basiertes Polyisocyanat, Bayer MaterialScience AG, Leverkusen, DE) wurden 214,5 g eines Propylenglykol gestarteten Polypropylenoxiddiols mit einem zahlenmittleren Molekulargewicht von 2 000 g/mol und 214,5 g eines Ethylendiamin gestarteten Polypropylenoxiddiols mit einem zahlenmittleren Molekulargewicht von 3 740 g/mol bei 80°C zugegeben. Nach beendeter Zugabe wurde bei 80°C weitergerührt bis der theoretische NCO-Gehalt von 8,6 Gew.-% erreicht wurde. Das Produkt hatte eine Viskosität bei 23°C von 2 800 mPas.

### Polyisocyanat 1

Mischung aus 90 Gew.-% Polyisocyanat A-I und 10 Gew.-% Polyisocyanat B-I, Festkörpergehalt 50 Gew.-% in Butylacetat als Lösemittel, NCO-Gehalt 4 Gew.-%, Viskosität bei 23°C ist 224 mPas, Monomergehalte TDI 0,16 Gew.-% und MDI 1,2 Gew.-%.

### Polyisocyanat 2

Mischung aus 90 Gew.-% Polyisocyanat A-I und 10 Gew.% Polyisocyanat B-II, Festkörpergehalt 50 Gew.-% in Butylacetat als Lösemittel, NCO-Gehalt 5,1 Gew.-%, Viskosität bei 23°C 134 mPas, Monomergehalte TDI 0,16 Gew.-% und MDI 1,7 Gew.-%.

### Polyisocyanat 3

1110 g Desmodur® IL 1451 und 46 g einer MDI-Isomerenmischung aus 65 Gew.-% 2,4-MDI und 35 Gew.-% 4,4'-MDI wurden mit 0,015 g Irganox® 1076 (sterisch gehindertes phenolisches Antioxidationsmittel, Ciba Geigy, Basel, CH) vorgelegt. Anschließend wurden bei 80°C 404 g eines Propylenglykol gestarteten Polyetherdiols mit einem Molekulargewicht von 4007 g/mol, einem Propylenoxidgehalt von 86,7 Gew.-% und einem Ethylenoxidgehalt von 13,3 Gew.-% zugetropft. Nach beendeter Zugabe wurde bei 80°C weitergerührt bis der theoretische NCO-Gehalt von 5,7 Gew.-% erreicht wurde. Anschließend wurden 438 g Butylacetat zugegeben. Das Produkt hatte einen NCO-Gehalt von 4 Gew.-%, eine Viskosität bei 23°C von 538 mPas bei einem Festkörpergehalt von 50 Gew.-% und einen Gehalt an freiem TDI von 0,08 Gew.-% und einen Gehalt an freiem MDI von 1,2 Gew.-%.

### Polyisocyanat 4: (Vergleich)

Zu 568 g Desmodur® IL 1451 wurden 250 g eines Propylenglykol gestarteten Polyetherdiols mit einem Molekulargewicht von 4007 g/mol, einem Propylenoxidgehalt von 86,7 Gew.-% und einem Ethylenoxidgehalt von 13,3 Gew.-% bei 80°C getropft. Nach beendeter Zugabe wurde bei 80°C weitergerührt bis der theoretische NCO-Gehalt von 4,5 Gew.-% erreicht wurde. Anschließend wurden 800 g Butylacetat zugegeben. Das Produkt hatte einen NCO-Gehalt von 1,8 Gew.-%, eine Viskosität bei 23°C von 83 mPas und einen Festkörpergehalt von 33 Gew.-%. Das erhaltene Produkt ist trüb.

### Polyisocyanat 5 (Vergleich)

Zu 568 g Desmodur® IL 1451 wurden 250 g eines Propylenglykol gestarteten Polyetherdiols mit einem Molekulargewicht von 4007 g/mol, einem Propylenoxidgehalt von 77,7 Gew.-% und einem Ethylenoxidgehalt von 22,3 Gew.-% bei 80°C zugetropft. Nach beendeter Zugabe wurde bei 80°C weitergerührt bis der theoretische NCO-Gehalt von 4,5 Gew.-% erreicht wurde. Anschließend wurden 250 g Butylacetat zugegeben. Das Produkt hatte einen NCO-Gehalt von 3,3 Gew.-%, eine Viskosität bei 23°C von 1 540 mPas und einen Festkörper Gehalt von 50 Gew.-%. Das erhaltene Produkt ist klar.

### Polyisocyanat 6: (Vergleich)

Zu 695 g Desmodur® IL 1451 wurden 305 g Acclaim® 2200 (difunktioneller Polyether auf Propylenoxid-Basis, Molekulargewicht Mₙ 2000 g/mol, Bayer MaterialScience AG, Leverkusen, DE) bei 80°C zugetropft. Nach beendeter Zugabe wurde bei 80°C weitergerührt bis der theoretische NCO-Gehalt von 3,8 Gew.-% erreicht wurde. Das Produkt wurde fest nach 2 Wochen Lagerung bei Raumtemperatur und löste sich nicht mehr in den herkömmlichen Lacklösemitteln.

### Polyisocyanat 7: (Vergleich)

Zu 695 g Desmodur® IL 1451 wurden 305 g Acclaim® 8000 (difunktioneller Polyether auf Polypropylenoxid-Basis, Molekulargewicht Mₙ 8000 g/mol, Bayer MaterialScience AG, Leverkusen, DE) bei 80°C zugetropft. Nach beendeter Zugabe wurde bei 80°C weitergerührt. Noch bevor der theoretische NCO-Gehalt erreicht wurde, war das Produkt fest und löste sich nicht mehr in herkömmlichen Lacklösemitteln.

### Polyisocyanat 8 (Vergleich)

555 g Desmodur® IL 1451 und 23 g einer MDI-Isomerenmischung aus 65 Gew.-% 2,4'-MDI und 35 Gew.-% 4,4'-MDI wurden vorgelegt. Anschließend wurden bei 80°C 202 g eines Ethylendiamin gestarteten Polyetherpolyols mit einem Molekulargewicht von 3740 g/mol und einem Propylenoxidgehalt von 100 Gew.-% zugetropft. Nach beendeter Zugabe wurde bei 80°C weitergerührt bis der theoretische NCO-Gehalt von 5,0 Gew.-% erreicht wurde. Anschließend wurden 236 g Butylacetat zugegeben. Das Produkt hatte einen NCO-Gehalt von 3,9 Gew.-%, eine Viskosität bei 23°C von 630 mPas bei einem Festkörpergehalt von 50 Gew.%. Das Produkt war trübe.

### Lacktechnische Untersuchungen

Die Polyisocyanate 1 bis 5 wurden als Grundierung und Decklack nach folgenden Grundrezepturen formuliert:

### Formulierung Grundierung:

Das jeweilige Polyisocyanat wurde mit Butylacetat auf 35 Gew.% verdünnt und anschließend mit 3 Gew.-% bezogen auf den Gesamtfeststoffgehalt Schleifwachs Ceraflour® 994, BYK Chemie, Wesel, DE vermischt.

### Formulierung Decklack:

Das jeweilige Polyisocyanat wurde mit Butylacetat auf 35 Gew.% verdünnt.

### Folgenden Prüfungen wurden durchgeführt:

- Die Stabilitäten wurden durch Beobachtung der Viskositätsentwicklung nach 15 Tagen bei Raumtemperatur und einer Luftfeuchtigkeit von 30 bis 50 % in offen Flaschen mit einem Öffnungsdurchmesser von 21 mm und einem Volumen von 125 ml ermittelt. Die Stabilitäten wurden als OK bezeichnet, wenn das Verhältnis von Auslaufzeit nach Lagerung zu Auslaufzeit vor Lagerung < 2 war. Die Auslaufzeiten wurden nach DIN 53211 bestimmt.
- Cold-Check Test
   Auf einer furnierten Spanplatte (20 x 40 cm) mit dunkler Beize (z.B. Lignal Hydro-Lasurbeize Bo 18-21946 der Fa. Lignal, DE) wurden 2 Grundierungsschichten und 2 Decklackschichten von jeweils 100 bis 120 g/m² gespritzt. Die Lacke wurden über Nacht bei Raumtemperatur getrocknet. Anschließend wurden die Lacke 24 Stunden bei 50°C aufbewahrt und danach noch mal 24 Stunden bei Raumtemperatur.
   Für den Cold Check Test wurden die Lacke im Folgenden 30 Zyklen unterworfen, wobei ein Zyklus aus einer Stunde Lagerung bei -20°C und anschließend einer Stunde Lagerung bei 50°C besteht. Zum Schluss wurde visuell beurteilt, ob Rissbildung in dem Lack aufgetreten ist. Die Lacke haben den Test bestanden (Beurteilung OK), wenn keine Rissbildung zu beobachten war.
- Grifffesttrocknung:
   Die Grifffesttrocknung wurde an den Decklackformulierung bestimmt.
   Die fertigen Lacke wurden dazu auf Glasplatten mit der geforderten Nassfilm-Schichtdicke (150, 210 µm) aufgezogen und bei Raumtemperatur (RT) getrocknet. In festgelegten Zeitabständen, die sich nach der erwartenden Endzeit richten, wird mit dem Daumen ein Druck von 2 - 3 kPa (evtl. vorher auf einer Waage ausgetestet) auf den Film ausgeübt. Der Zeitpunkt, an dem bei schräg auffallendem Licht kein Abdruck mehr zu sehen ist, gilt als Endpunkt der Bestimmung
- Pendelhärte des Decklacks nach König wurde nach DIN 53157 bestimmt.

| **Versuch** | **A** | **B** | **C** | **D** | **E** | **F** | **G** | **H** | **I** | **J** |
|---|---|---|---|---|---|---|---|---|---|---|
| Polyiso-cyanate | 1 | 2 | 3 | A-1 | 4 | 5 | 6 | 7 | 8 | NC** |
| Cleraflour® 994 in % | 3 | 3 | 3 | 3 | 3 | 3 | - | - | - | - |
| Festkörper in % | 35 | 35 | 35 | 35 | 35 | 35 | 35 | 35 | 50 | 20 |
| Aussehen | klar | klar | klar | klar | trüb | klar | klar | trüb | trüb | klar |
| Grifffestrocknung | 25 | 30 | 25 | 30 | 30 | 25 | - | - | - | 20 |
| Pendelhärte in s | 130 | 140 | 170 | 140 | 120 | 140 | - | - | - | 140 |
| Cold Check Test | OK | OK | OK | nicht OK | OK | OK | - | - | - | - |
| Stabilität | OK | OK | OK | nicht OK | nicht OK | nicht OK | nicht OK | nicht OK | - | OK |

| | | | | | | | | | | |
|---|---|---|---|---|---|---|---|---|---|---|
| ** Nitrocellulose-Lack bestehend aus 13 % Alkydal® E41 (Alkydharz 70 %-ig in Xylol, Viskosität bei 23°C 2600 mPas, Bayer MaterialScience AG, Leverkusen), 17 % NC 510, (Nitrocellulose Lack, 35 %-ig in Isopropanol, Wolff Walsrode AG, Walsrode, DE), 42 % Ethylacetat, 11 % Methylisobutylketon und 17 % Aceton. | | | | | | | | | | |

Die Lacke hergestellt aus den Polyisocyanaten 1 - 3 (Versuche A - C) zeigen ein gutes Trocknungsverhalten (Grifftrocknung < 30 min), ausreichend hohe Pendelhärten (>100 s), bestehen den Cold Check Test und die Stabilität der Grundierungsformulierungen ist ausreichend.

Die Beschichtungen aus Polyisocyanat A-1 (Versuch D, rein TDI-basiert) überstehen den Cold Check Test nicht unbeschadet und die Stabilität der Grundierung ist unzureichend.

Die Beschichtungen aus Polyisocyanat 4 (Versuch E) basieren auf einem Polyisocyanat mit einem höheren Polyethergehalt bei ansonst gleichem Polyethertyp wie bei Polyisocyanat 4. Das Polyisocyanat 5 ist trüb und eignet sich von daher nicht zur Herstellung von Beschichtungen.

Bei Polyisocyanat 5 (Versuch F) weist der Polyether einen höheren Ethylenoxidgehalt verglichen mit dem Polyether aus Polyisocyanat 4 auf. Das Polyisocyanat ist zwar klar, jedoch ist die Stabilität der Formulierung unzureichend.

Polyisocyanate 6 und 7 (Versuche G und H) basieren auf langkettigen Acclaim® Polyethern ohne Polyethylenoxidblock. Da diese festen Produkte unlöslich sind, war eine Weiterverarbeitung nicht möglich.

Polyisocyanat 8 (Versuch I) basiert auf einer TDI-Isocyanurat/MDI-Mischung und einem rein PObasierten Polyether einer Funktionalität von 4. Auf ein Polyetherdiol mit EO-Block, wie es wesentlich für den beanspruchten Gegenstand ist, wurde verzichtet. Das Prepolymer war trübe und ist von daher zur Herstellung von homogenen und optisch einwandfreien Beschichtungen ungeeignet.

## Patentansprüche

1. Lösemittelhaltige Zubereitungen mit einem NCO-Gehalt von 1 bis 7 Gew.-%, einem Festkörpergehalt von 20 bis 70 Gew.-%, einem Gehalt an monomerem TDI von weniger als 0,2 Gew.-% und monomeren Methylendiphenyldiisocyanaten von weniger als 2 Gew.-% enthaltend NCO-gruppenhaltige Prepolymere basierend auf TDI-Isocyanuratpolyisocyanaten und Diphenylmethandiisocyanaten, wobei wenigstens eines der Prepolymere unter Verwendung eines Ethylenoxidblock-haltigen Polyetherdiols mit einem zahlenmittleren Molekulargewicht von 3 000 bis 4 500 g/mol und einen Ethylenoxidgehalt von 2 bis 18 Gew.-% bezogen auf alle enthaltenen Alkylenoxideinheiten des Diols hergestellt wurde.

2. Verfahren zur Herstellung der lösemittelhaltigen Zubereitungen gemäß Anspruch 1, bei dem in Anwesenheit organischer Lösemittel Prepolymere aus
A) einer TDI-Komponente enthaltend TDI-Isocyanuratpolyisocyanate und
B) einer MDI-Komponente enthaltend Diphenylmethandiisocyanate
durch Umsetzung wenigstens einer der beiden Komponenten mit
C) einem Polyetherdiol mit einem zahlenmittleren Molekulargewicht von 3 000 bis 4 500 g/mol und einen Ethylenoxidgehalt von 2 bis 18 Gew.-% bezogen auf alle enthaltenen Alkylenoxideinheiten des Diols
hergestellt werden.

3. Verfahren zur Herstellung lösemittelhaltiger Zubereitungen gemäß Anspruch 2, **dadurch gekennzeichnet, dass** die Verbindungen aus A) in Mengen von 95 bis 99 Gew.-% und die Verbindungen aus B) in Mengen von I bis 5 Gew.-% bezogen auf die Gesamtmenge von A) und B) eingesetzt werden.

4. Verwendung lösemittelhaltiger Zubereitungen gemäß Anspruch 1 bei der Herstellung von Beschichtungen, Verklebungen und/oder Dichtungen.

5. Feuchtigkeitshärtende Beschichtungsmittel enthaltend
a) lösemittelhaltige Zubereitungen gemäß Anspruch 1,
b) gegebenenfalls Katalysatoren zur Beschleunigung der Reaktion der freien NCO-Gruppen mit Feuchtigkeit sowie
c) Hilfs- und Zusatzstoffe.

6. Beschichtungen, Verklebungen und/oder Dichtungen erhältlich aus lösemittelhaltigen Zubereitungen gemäß Anspruch 1.

7. Substrate beschichtet mit Beschichtungen nach Anspruch 6.

## Claims

1. Solvent-containing formulations having an NCO content of from 1% to 7% by weight, a solids content of from 20% to 70% by weight, a monomeric TDI content of less than 0.2% by weight and a monomeric methylenediphenyl diisocyanate content of less than 2% by weight, comprising NCO-containing prepolymers based on TDI isocyanurate polyisocyanates and diphenylmethane diisocyanates, at least one of the prepolymers having been prepared using a polyetherdiol containing ethylene oxide blocks and having a number-average molecular weight of from 3 000 to 4 500 g/mol and an ethylene oxide content of from 2 to 18% by weight, based on all the alkylene oxide units present in the diol.

2. Process for preparing the solvent-containing formulations according to Claim 1, wherein prepolymers are prepared in the presence of organic solvents from
A) a TDI component comprising TDI isocyanurate polyisocyanates and
B) an MDI component comprising diphenylmethane diisocyanates
by reacting at least one of the two components with
C) a polyetherdiol having a number-average molecular weight of from 3 000 to 4 500 g/mol and an ethylene oxide content of from 2 to 18% by weight, based on all of the alkylene oxide units present in the diol.

3. Process for preparing solvent-containing formulations according to Claim 2, **characterized in that** the compounds from A) are used in amounts of from 95% to 99% by weight and the compounds from B) are used in amounts of from 1% to 5% by weight, based on the total amount of A) and B).

4. Use of solvent-containing formulations according to Claim 1 in the production of coatings, adhesive bonds and/or seals.

5. Moisture-curing coating compositions comprising
a) solvent-containing formulations according to Claim 1,
b) optionally catalysts for accelerating the reaction of the free NCO groups with moisture and
c) auxiliaries and additives.

6. Coatings, adhesive bonds and/or seals obtainable from solvent-containing formulations according to Claim 1.

7. Substrates coated with coatings according to Claim 6.

## Revendications

1. Compositions contenant des solvants présentant une teneur en groupes NCO comprise entre 1 et 7 % en poids, une teneur en matières solides comprises entre 20 et 70 % en poids, une teneur en TDI monomères inférieure à 0,2 % en poids et en méthylènediphényldiisocyanates monomères inférieure à 2 % en poids, contenant des prépolymères comportant des groupes NCO à base de TDI-isocyanuratepolyisocyanates et de diphénylméthanediisocyanates, dans lesquelles au moins un des prépolymères a été préparé en utilisant un polyétherdiol contenant des blocs d'oxyde d'éthylène présentant un poids moléculaire moyen en nombre compris entre 3 000 et 4 500 g/mol et une concentration en oxyde d'éthylène comprise entre 2 et 18 % en poids par rapport à toutes les unités d'oxyde d'alkylène du diol contenues.

2. Procédé de préparation des compositions contenant des solvants selon la revendication 1, dans lequel, sont préparés, en présence de solvants organiques, des prépolymères constitués
A) d'un composant TDI contenant des TDI-isocyanuratepolyisocyanates et
B) d'un composant MDI contenant des diphénylméthanediisocyanates
par mise en réaction d'au moins un des deux composants avec
C) un polyétherdiol présentant un poids moléculaire moyen en nombre compris entre 3 000 et 4 500 g/mol et une concentration en oxyde d'éthylène comprise entre 2 et 18 % en poids par rapport à toutes les unités d'oxyde d'alkylène du diol contenues.

3. Procédé de préparation des compositions contenant des solvants selon la revendication 2, **caractérisé en ce que** les composés de A) sont mis en oeuvre en proportions de 95 à 99 % en poids et les composés de B) sont mis en oeuvre en proportions de 1 à 5 % en poids par rapport à la teneur totale de A) et B).

4. Utilisation des préparations contenant des solvants selon la revendication 1 pour la réalisation de revêtements, collages et/ou joints d'étanchéité.

5. Revêtements durcissant à l'humidité contenant
a) des compositions contenant des solvants selon la revendication 1,
b) le cas échéant, des catalyseurs pour accélérer la réaction des groupes NCO libres avec l'humidité et
c) des adjuvants et des additifs.

6. Revêtements, collages et/ou joints d'étanchéité pouvant être obtenus à partir des compositions contenant des solvants selon la revendication 1.

7. Substrats recouverts de revêtements selon la revendication 6.
